# EUROPEAN PATENT APPLICATION

(11) **EP 2 533 397 A2**
(43) Date of publication of application: **12.12.2012**
(21) Application number: 12170376.3
(22) Date of filing: 01.06.2012
(51) Int. Cl.: H02J 13/00

(54) **Coordinating energy management systems and intelligent electrical distribution grid control systems**

(30) Priority: 08.06.2011 US 201113155601
(71) Applicant: Alstom Grid, Redmond, WA 98052 (US)
(72) Inventor: Boardman, Ethan Clair, Seattle, WA 98112 (US); Venkata, Subrahmanyam Saraswati, Oro Valley, AZ 85755 (US)
(74) Representative: Grünecker, Kinkeldey, Stockmair & Schwanhäusser

(57) **Abstract**

Aspects of a multi-level electrical distribution control system associated with an electrical distribution grid are disclosed. Coordination between the multi-level control system, the electrical distribution grid and an electrical transmission system can provide improved utilization of energy within the electrical distribution grid. Further, dynamic reconfiguration of the electric distribution grid can improve reliability of the electric distribution grid and can provide additional energy utilization pathways to reduce demand on the electrical transmission system. Moreover, improved control of the topography and energy utilization of the electrical distribution grid can improve forecasting for development of the electrical transmission system.

## Description

### TECHNICAL FIELD

The present application relates generally to electrical grids, and more particularly, to intelligent electrical grids.

### BACKGROUND

Traditional electrical distribution systems have existed relatively unchanged in control topography for many years, due in part to the high cost of altering the infrastructure. More recently, efforts to improve the efficiency and reliability of electrical distribution grids have increased from both private and public interests in electrical distribution systems incorporating intelligent or computerized control systems, e.g., "smart grids". One well publicized component related to "smart grids" is the smart electrical meter. The smart meter, found at both residential and commercial customers, allows electrical consumption information to be transmitted to a distribution-level control center (DCC). The DCC is typically connected to an electrical transmission grid energy control center (ECC) of the electrical transmission network. The ECC is generally managed by an electrical transmission grid energy management system (EMS).

Historically, energy supply was considered essentially limitless in that the transmission grid could provide as much energy as a distribution grid could distribute to subscribers. For example, when a subscriber turned on a light bulb, somewhere a coal fired power plant burned a little more coal to provide the energy to illuminate the bulb. Where more energy was needed, additional power plants were added to the electrical grids. However, the costs of adding additional large scale power plants to electrical grids to maintain an excess of supply in the energy market can be prohibitive. For example, construction costs can be large, environmental footprints can be daunting, and maintenance and upkeep under increasingly strict regulation can be demanding. As such, it is becoming increasingly desirable to wring more efficiency out of existing energy resources rather than adding increased capacity by traditional routes.

Numerous technologies will evolve that can improve the efficient usage of energy on the distribution side and transmission side of the electrical grid. As such, the conventional energy transmission and distribution models, where there was relatively little coordination between a DCC and ECC, will need to adapt to incorporate these evolving technologies. As intelligent electrical distribution grid control systems are deployed and as pressure increases to improve efficiency from existing electrical transmission system resources, increased coordination between energy management systems and intelligent electrical distribution grid control systems will become increasingly important to maintain competitive advantage.

The above-described deficiencies of traditional electrical transmission and distribution grids are merely intended to provide an overview of some of the problems of conventional technologies, and are not intended to be exhaustive. Other problems with conventional technologies and corresponding benefits of the various non-limiting embodiments described herein may become further apparent upon review of the following description.

### SUMMARY

The following presents a simplified summary of the disclosed subject matter in order to provide a basic understanding of some aspects of the disclosed subject matter. This summary is not an extensive overview of the subject disclosure. It is intended to neither identify key or critical elements of the subject disclosure nor delineate the scope of the disclosed subject matter. Its sole purpose is to present some concepts of the disclosed subject matter in a simplified form as a prelude to the more detailed description that is presented later.

One or more embodiments of the disclosed subject matter illustrate a multi-level electrical distribution control system associated with an electrical distribution grid. In an aspect, coordination between an electrical transmission system and the multi-level electrical distribution control system can improve the utilization of energy within the electrical distribution system. Where energy from the transmission system is a limited resource, prioritization of subscriber energy access events, incorporation of distributed generation, scheduling of energy access events, delaying energy access events, sharing of energy resources, and dynamic configuration of the topography of the distribution grid can reduce the demand for energy from the transmission grid and can provide a more robust distribution grid. Further, the improved utilization of the distribution grid can provide important analytical data for forecasting development of transmission grid resources.

In another non-limiting aspect, distribution grid control network communication with subscriber-side equipment at a fine granular level can facilitate improved utilization and energy resource allocation. Smart appliances or appliances equipped with smart appliance module (SAM) components can enable equipment level granularity for data acquisition and rule enforcement. As such, energy flow can be highly directed and optimized. This can enable the development of a real time, or near real time, energy access market. This market can provide an "a la carte" energy consumption experience for subscribers, allowing them to tightly regulate their own energy consumption.

To the accomplishment of the foregoing and related ends, the disclosed subject matter, then, comprises the features hereinafter fully described. The following description and the annexed drawings set forth in detail certain illustrative aspects of the disclosed subject matter. However, these aspects are indicative of but a few of the various ways in which the principles of the disclosed subject matter may be employed. Other aspects, advantages and novel features of the disclosed subject matter will become apparent from the following detailed description of the disclosed subject matter when considered in conjunction with the drawings.

### BRIEF DESCRIPTION OF DRAWINGS

FIG. 1 is a block diagram illustrating a system having an electrical distribution network control system communicatively coupled to an electrical transmission grid energy management system in accordance with aspects of the disclosed subject matter.

FIG. 2 is a block diagram illustrating a system having a hierarchical control topography for an electrical distribution network coupled to an electrical transmission grid energy management system in accordance with aspects of the disclosed subject matter.

FIG. 3 is a block diagram illustrating an exemplary system having an electrical distribution network control system communicatively coupled to an electrical transmission grid energy management system in accordance with aspects of the disclosed subject matter.

FIG. 4 illustrates a block diagram of an exemplary system having an electrical distribution network control system communicatively coupled to subscriber side components in accordance with aspects of the disclosed subject matter.

FIG. 5 is a graphic illustration of a system having several subscriber side components in accordance with aspects of the disclosed subject matter.

FIG. 6 is a block diagram illustrating a distribution network node controller component communicatively coupled to subscriber side components in accordance with aspects of the disclosed subject matter.

FIG. 7 illustrates a block diagram of an exemplary system having an electrical distribution network control system communicatively coupled to subscriber side components in accordance with aspects of the disclosed subject matter.

FIG. 8 is an exemplary flowchart of procedures for a method facilitating coordination between an electrical distribution control system and an electrical transmission grid in accordance with aspects of the disclosed subject matter.

FIG. 9 illustrates a flowchart of procedures of a method facilitating coordination between an electrical distribution control system and an electrical transmission grid in accordance with aspects of the disclosed subject matter.

FIG. 10 illustrates a flowchart of procedures from a method facilitating hierarchical control in an electrical distribution network in accordance with aspects of the disclosed subject matter.

FIG. 11 illustrates a block diagram of a computer operable to execute a portion of the disclosed subject matter.

FIG. 12 is a representation of an exemplary electrical grid environment in which the various aspects of the disclosed subject matter can be practiced.

### DETAILED DESCRIPTION

The disclosed subject matter is now described with reference to the drawings, wherein like reference numerals are used to refer to like elements throughout. In the following description, for purposes of explanation, numerous specific details are set forth in order to provide a thorough understanding of the disclosed subject matter. It may be evident, however, that the disclosed subject matter may be practiced without these specific details. In other instances, well-known structures and devices are shown in block diagram form in order to facilitate describing the disclosed subject matter.

Traditional electrical transmission grids are often viewed as unlimited sources of electrical energy and are expected to supply any amount of power requested by electrical distribution systems distribution systems. However, increasingly economic and environmental concerns are causing electrical transmission systems to expand at a more limited rate. Where energy consumption continues to increase at a rate that outpaces energy production, energy can become a limited commodity. Basic supply and demand theory suggests that as energy becomes a limited commodity, the cost of that commodity will rise with increased demand absent other suppliers. Thus, subscribers can experience increased energy costs from an inefficient use of a limited resource. As such, it is desirable to more efficiently consume energy from a transmission grid.

In an aspect, additional energy capacity can be added to a system by way of distributed generation of power. Distributed generation is associated with numerous small sources of energy, *e.g.*, solar panels on homes, small wind farms, etc., rather than fewer large sources of energy, *e.g.*, coal fired power plants, large dams and hydroelectric systems, etc. These distributed sources are thus, typically added to the electrical distribution grid rather than the electrical transmission grid. These numerous small energy sources can lower the demand for energy from the connection to the electrical transmission grid.

In a further aspect, more efficient use of energy by subscribers to an electrical utility can reduce the demand for energy from an electrical transmission system. As an example, the implementation of peak and off-peak electrical energy periods and correspondingly different fees per unit energy can result in modification of the subscriber consumption of energy. For example, people will modify their behavior to save money, such as by drying clothes late at night in an off-peak time/rate window rather than drying clothes at a higher cost during the dinner hour in a peak-time/rate window. However, this system can be somewhat rudimentary in that the dynamic changes in energy demand can be poorly reflected in a relatively static peak/off-peak pricing structure.

To facilitate more accurate techniques for capturing the ebb and flow of energy demand and influence subscriber behaviors with market-type forces, advanced electrical distribution grid control systems and methods can be employed. These advanced electrical distribution grid control systems and methods, collectively referred to as smart or intelligent distribution grid systems or methods, can employ a multi-level control system, including data acquisition and processing, that can offer improvements in electrical distribution system response speed, efficiency, and reliability. For example, control data can incorporate data from "health sensors" on electrical line poles to facilitate dynamic rerouting of power around a broken pole, to notify repair crews automatically of worn or damaged poles to allow repair before a catastrophic failure, etc. As another example, as plug-in electric vehicles become more popular, charging these vehicles can be power intensive, especially where several vehicles "coming home from work" attempt to charge simultaneously. Control data relating to high loads at a residential transformer, for example from plugging in several electric cars, can trigger protective action to safeguard the transformer, can push out incentivized charging scheme data to the electrical consumers to lessen the peak power demand, etc.

Additionally, the use of multi-level control systems can be scalable to accommodate ever-increasing data volumes as more electrical distribution system devices become highly computerized and data intensive. For example, additional mid-level components can be included to provide for improved load balancing, such as by shifting load to different phases, directing additional power through alternate nodes in a mesh electrical distribution system, etc. A further example can be the addition of bottom-level components for distributed power generation elements, such as small wind farms, residential geothermal electrical sources, etc.

Further, the use of multi-level control systems can employ real time, or near real time, electrical distribution grid data in pricing models that can more accurately track, and thus more efficiently influence, subscriber access to the energy supply. Where complex or dynamic energy access models arise from smart distribution grid systems and methods, subscriber side equipment can be deployed to facilitate subscriber-side participation in corresponding efficient energy access programs. For example, rather than rudimentary peak/off-peak programs, a dynamic pricing model can enable a dynamic subscriber energy market that allows subscribers to participate in energy transactions at a dynamically fluctuating market rate, e.g , a clothes dryer could wait to dry clothes until the rate dropped below a threshold cost. Thus if energy consumption is low, the rates can also be low and the clothes can be dried sooner than might occur under a peak/off-peak system. Similarly, if energy consumption is high, the rates can be high and the clothes can be dried later than might have occurred with the peak/off-peak system. Moreover, the subscriber can determine the cost they will bear to access the resource at a much finer level of granularity that might otherwise be possible.

Dynamic energy access models also can facilitate prioritized access. Prioritized access can enable subscribers to define a level of energy access that can be based on any parameter, not just cost. For example, a subscriber can designate certain electrical systems as critical systems that should always have access to energy (*e.g.*, medical equipment, emergency lighting, security systems, etc.) Similarly, a subscriber can designate certain electrical systems as luxury systems that should only have access to energy on a case-by-case basis (*e.g.*, landscape lighting, passive display devices (digital picture frames), etc.) Further, a subscriber can designate certain electrical systems as cost-based systems that should have access to energy based on cost, such that certain energy uses are of a lower priority, *e.g.*, clothes drying, and thus are enabled only at a lower price than a higher priority energy use, cooking stove use. Moreover, priority designation can combine parameters, for example, a priority designation can combine cost aspects and be time dependant, *e.g.*, if a hot tub needs to be hot when the subscriber gets home from work at 7pm and energy costs are highest from 5-9pm, the water can be heated to 90% of final temperature with lower cost energy from 3-5pm and then consume no further power until 6:30pm when the hot tub is brought to the final temperature at a more expensive rate. This essentially converts electrical energy into thermal energy and stores the thermal energy in the hot tub, minimizing the amount of heating required at the higher evening rate.

Multi-level control systems in the electrical distribution grid can also facilitate reconfiguration of the distribution grid to enable alternate distribution topographies that can be beneficial to efficient energy consumption. In an aspect, where certain sections of a distribution grid are using large amounts of power, this can be associated with higher operating costs and/or lower distribution efficiency, *e.g.*, energy losses associated with heating from high current loads through conductors, running transformers in excess of their ratings, etc. By reconfiguring the distribution grid, it can be possible to split high consumption areas such that they access the distribution grid in a more efficient or cost effective manner. For example, a factory can be served by a first transformer and homes for factory workers by a second transformer. A multi-level control system can designate that when the workers return home in the evening that the first transformer, *e.g.*, the factory transformer, be reconfigured to connected to the distribution conductors for the homes to reduce the load on the second transformer as energy consumption at the factory drops and consumption at the homes increases.

Thus, by having better control and knowledge of the electrical distribution grid, energy access and distribution of energy resources can be adapted which can result in lower levels of energy consumption reducing the demand on the transmission grid. Further benefit can also be gained by coordinating subscriber energy access and distribution grid configuration with components of the transmission grid such as the transmission grid energy management system (EMS). Data can be passed by components of an electrical distribution control system, *e.g.*, a distribution network node controller (DNNC) component, to the EMS. As a non-limiting example, a top-level DNNC can coordinate with an EMS to supply energy to the electrical distribution grid based on data processed from mid- and bottom-level DNNC components. The mid- and bottom-level components can adaptively configure the topography of the distribution network in accord with configuration rules. Further, the top-level DNNC component can access pricing models from the EMS and can push down pricing models to the bottom-level DNNC components for dynamically pricing energy access to subscribers. Continuing the non-limiting example, based on anticipated energy consumption, the top-level DNNC component can purchase blocks of energy at contractually designated prices and can execute optimization algorithms to sell back unused energy at spot prices, purchase additional energy at spot prices, or adjust subscriber pricing models to induce an adjustment in subscriber energy access.

Additionally, distribution grid level and subscriber level energy storage and generation can be parameters included in communications and coordination between the EMS and the electrical distribution control system. Where regions of an electrical distribution system include storage capacity or generation capacity, these can be accessed by the transmission grid in certain circumstances. For example, as plug-in electric vehicles (PEVs) become increasingly popular, their batteries can function as energy storage devices. As such, particularly high volumes of PEVs can feasibly source a significant amount of energy. Similarly, for example, particularly high levels of distributed generation, *e.g.*, entire neighborhoods in Arizona with solar panel roofs, can be a significant source of energy. In an aspect, a transmission grid can offer a discount for storing energy from off-peak times for use in peak times. Where an electrical distribution grid can designate storage and generative capacity to an EMS, optimization algorithms can be employed to improve energy consumption from the transmission grid by the various distribution grids attached thereto.

As such, coordination between the EMS and intelligent electrical distribution grid control systems can facilitate demand response, *e.g.*, systematically formulating, applying and solving multi-objective optimization formulas to demand response models. Demand response is providing the impetus for accelerating the smart grid. It is critical for realizing smart grid success. Further, prioritization of subscriber-level energy access can be impacted by information coordinated between the EMS and electrical distribution grid control systems. For example, optimally managing two-way power flow without exceeding the thermal capacities of distribution transformers and lines can be included in optimization formulas for prioritization of energy access, *e.g.*, by influencing costs or capping energy access. Further, it can be highly desirable to schedule distributed generating sources optimally depending on the status of the system. If handled intelligently, the burden on the primary side of an electrical utility system can be considerably reduced with a corresponding reduction in needed capacity and associated costs. Moreover, adaptive distribution systems can provide reduced equipment stress, which can in turn provide better reliability.

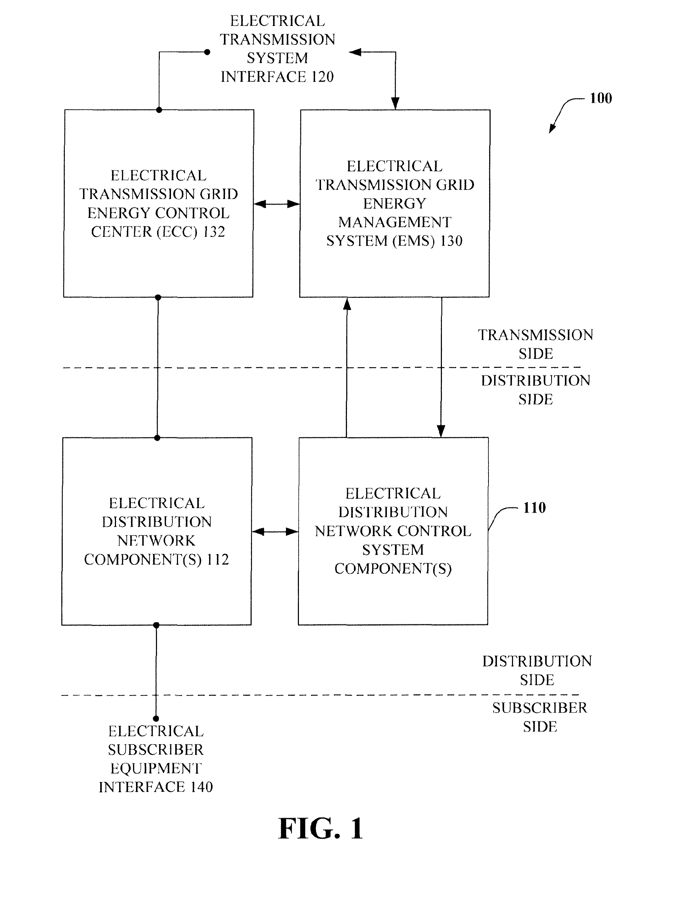

FIG. 1 is a block diagram illustrating a system 100 having an electrical distribution network control system communicatively coupled to an electrical transmission grid energy management system in accordance with aspects of the disclosed subject matter. System 100 can include one or more electrical distribution network control system component(s) 110. Electrical distribution network control system component(s) 110 can be communicatively coupled to one or more electrical distribution network component(s) 112. In an embodiment of system 100, electrical distribution network control system component(s) 110 and electrical distribution network component(s) 112 together can constitute a portion of an intelligent electrical distribution network between the transmission-side and the subscriber-side of an electrical grid. As such, electrical distribution network control system component(s) 110 can act as controllers of electrical distribution network component(s) 112.

System 100 can further comprise an electrical transmission system interface 120. Electrical transmission system interface 120 can allow system 100 to communicatively couple with the electrical transmission grid by way of electrical transmission grid energy management system (EMS) 130. Further, electrical transmission system interface 120 can allow system 100 to energetically connect to the electrical transmission grid by way of electrical transmission grid energy control center (ECC) 132. EMS 130 can be communicatively coupled to ECC 132. In one embodiment of system 100, EMS 130 and ECC 132 together can act as point of connection to the electrical transmission grid for one or more distribution grids.
EMS 130 can act as a controller of ECC 132. EMS 130 can be communicatively coupled to electrical distribution network control system component(s) 110. Further, ECC 132 can energetically connect to of electrical distribution network component(s) 112.

As used herein, the term "communicatively" coupled or similar terms indicates that the coupling can at least support communication between components while the term "energetically" connected or similar terms indicates that the connection can at least support energy transfer between components. As such, an energetic connection is not strictly limited to energy transfer, unless otherwise indicated. An energetic connection can therefore also have a communicative aspect. As a non-limiting example, electrical energy can be transferred from a distribution transformer to a smart meter by way of mains conductors and information can be carried over the same mains conductors, *e.g.*, power line communication.

System 100 can further include electrical subscriber equipment interface 140. Electrical subscriber equipment interface 140 can be energetically connected to electrical distribution network component(s) 112. Electrical subscriber equipment interface 140 can facilitate connection to subscriber side components of an electrical grid. As non-limiting examples, electrical subscriber equipment interface 140 can be a component of a charging station for a plug-in electric vehicle (PEV), a component of a smart meter at a subscriber home, a component of a relay connecting a distributed generation source to a distribution grid, etc.

System 100 can facilitate communication between the transmission side and the subscriber side by way of the distribution side of an electrical grid. In an aspect this communication can be used to direct control elements of the distribution network towards efficient use of energy from the transmission network. As non-limiting examples, electrical distribution network control system component(s) 110 can cause the topography of the distribution grid to be adapted to distribute energy to subscribers in a more efficient manner; to redistribute energy to high priority areas in times of emergency, to reroute energy to avoid damaged areas of the grid, to allow sharing of distributed generation sources across the distribution grid, etc.

In a further aspect, communication between the transmission side and the subscriber side, by way of the distribution side of an electrical grid, can be leveraged to create favorable conditions for subscribers to more efficiently access energy resource. This can include reduced energy access, accessing energy in a more predictable manner, *e.g.*, scheduling energy access, accessing energy in a more evenly distributed manner, *e.g.*, shifting energy access from peak times to off-peak times, etc. As a non-limiting example, where an electrical utility has contracted for an amount of energy and additional energy usage would carry a premium cost to the utility, energy access from the transmission grid can be monitored by EMS 130 and communicated to electrical distribution network control system component(s) 110. Based, at least in part, on this information, electrical distribution network control system component(s) 110 can distribute a pricing model to subscribers over the distribution grid. Based on this pricing model, smart homes or smart appliances can adapt energy access plans based on subscriber preferences and utility limitations. The subscriber energy access plans can be communicated to the electrical distribution network control system component(s) 110 and an expected energy access for the distribution grid can be generated. Based on the contract price and premium price of energy, a determination can be made to further modify subscriber pricing to adapt energy access to the contracted energy allocation or to purchase/sell additional blocks of energy from/to the transmission grid.

In one embodiment this can create a real time, or near real time, subscriber-level dynamic rate energy access market wherein subscribers can prioritize energy access according to one or more parameters. This subscriber-level market can allow subscriber demand and distribution grid supply to drive efficient energy access. Communication with the energy commodity supplier, *e.g.*, the transmission grid, can improve the planning, development, and use of the transmission grid. As a non-limiting example, determining a market rate for energy access can facilitate educated decision regarding expansion if the transmission grid.

In another embodiment, scheduled energy access and energy access shifting can result in more flat energy access across the electrical grid. Scheduled energy access can relate to advanced planned energy access, for example, a hospital laundry facility can schedule drying of linens to late evening and schedule that energy access such that the utility has advanced notice that an energy demand will occur at a known time. Energy access shifting can relate to energy access that can be reasonably delayed and can be considered of lower priority. Energy access that is related to lower priority can be delayed until other parameters are met. As a non-limiting example, charging a PEV can be delayed until there are sufficient energy resources, such as, in off-peak hours, so long as the PEV is charged for the morning commute. Thus, the charging of the PEV can be time shifted to a more optimal time period to reduce peak demand on the electrical grid. As another non-limiting example, a charged PEV can discharge to provide energy during peak times and be recharged at a later off-peak time. As further non-limiting examples, sharing of energy resources can be accomplished, such as charging three PEVs either at full rate sequentially one PEV at a time; at a slower rate in parallel where each PEV simultaneously receives 1/3 of the current; at a slower rate in a shared sequential mode where each PEV receives full current for a short period, then the next PEV receives full current for a short period, and so on, cycling through the PEVs until they all reach full charge; etc.

In a further embodiment, information accessed by electrical distribution network control system component(s) 110 from EMS 130 can facilitate dynamic reconfiguration of the distribution grid to accommodate transmission grid conditions. Where the transmission grid can, for example, provide information about energy supply and energy cost, the distribution grid can dynamically reconfigure to adapt to the transmission grid conditions reflected by the transmission grid information. As a non-limiting example, information that the transmission grid costs will increase due to an increase in natural gas prices and increased load from air conditioners during an upcoming forecast heat wave, the distribution system can proactively connect to local power generation sources that can become more economically competitive with the transmission system, can offer subscribers higher buy back rates for excess energy, such as from PEVs or distributed generators, and can adjust the distribution grid to include more distribution transformers to compensate for the higher thermal load on the distribution grid during the heat wave resulting from higher ambient temperatures and an expected increase in energy demand for air conditioning systems.

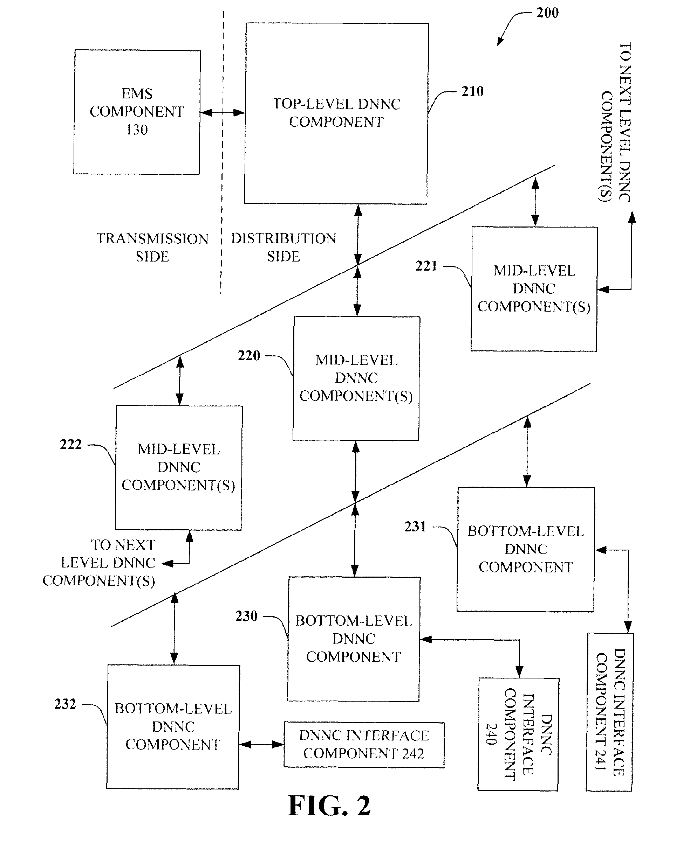

FIG. 2 is a block diagram of a system 200 having a hierarchical control topography for an electrical distribution network in accordance with aspects of the disclosed subject matter. System 200 can provide for hierarchical distribution of control processes including, for example, electrical distribution system data access and acquisition, data processing, or control signaling. In an aspect, system 200 can emulate traditional flat distribution control center (DCC) topography and as such can be considered "drop-in compatible". This type of compatibility with legacy systems can facilitate the incorporation of multi-level DNNC components to effect an eventual conversion to tiered control topographies. For example, bottom-level DNNC components can be placed in the field and simply pass-through data to an existing DCC. However, the presently disclosed subject matter also provides for non-flat control topographies.

System 200 is presented as a "tree-structure" electrical distribution control system for ease of explanation. System 200 includes a top-level, a mid-level, and a bottom-level of control. As illustrated, a component at a level can act as a parent node to child nodes of a lower level. As such, top-level DNNC component 210 is illustrated as being a parent controller to three mid-level DNNC controllers 220, 221, 222. Similarly, mid-level DNNC controller 220 is illustrated as being a parent controller to three bottom-level DNNC controllers 230, 231 and 232. As illustrated, control events and data at bottom-level DNNC component 231 can bubble up to mid-level DNNC component 220 and further bubble up to top-level DNNC component 210, and correspondingly be pushed down by the reverse path.

Tree structured control topographies, *e.g.*, as exemplified in system 200, can generally be easily integrated into existing conventional electrical distribution grid systems that frequently also employ a tree structure for delivery of power. However, more modern electrical distribution system schemes or control topographies can employ other structures of control topography.

In various non-limiting embodiments, a three tiered system is described in which a top-level DNNC component, a middle-level DNNC component, and a bottom-level DNNC component are set forth. For the avoidance of doubt, such embodiments can more generally be considered with respect to a first-level DNNC component, a second-level DNNC component and a third-level DNNC component. Such embodiments can also be extended to a fourth-level DNNC component, or fifth-level component, and so on. Further, the terms "parent", "senior", or similar terms can indicate a higher level DNNC component and the terms "child", "junior", or similar terms can indicate a lower level DNNC component.

In a further aspect, system 200 provides for bidirectional communication between DNNC components and across the tiers of the hierarchical topography of the distribution network control system. As a non-limiting example, top-level DNNC component 210 and bottom-level DNNC component 230 can be communicatively coupled across the several tiers of the distribution network control system. The use of a multi-level control topography can reduce the amount of data "bubbled up" to higher level DNNC components by employing distributed processing of electrical distribution grid data. Additionally, the multi-level control topography can facilitate "pushing" control data down to lower level DNNC components. This can be in the form of direct control or in the form of pushed down control rules or logic.

Additionally, multi-level electrical distribution system topography can facilitate inclusion of distributed generation sources into the electrical distribution grid. DNNC components can be adapted to control local and lower-level tasks. For example, a DNNC component can receive a pushed rules package that includes processes associated with micro-generators. As such, where micro-power generation is indicated, the DNNC component at that level can both communicate conditions and data up to higher level DNNC components, and can control the electrical distribution system elements at the same level or lower according to the rules package, including accepting energy from distributed generators. This local control frees up the resources of the more senior level DNNC components to control of respectively higher levels of the electrical distribution grid.

In a still further aspect, multi-level electrical distribution system topography can facilitate nodal power balancing. That is, where data is available for a node, rules can be implemented or generated to adapt power consumption in a determinate manner. Privacy rules can be implemented to protect sensitive information. This local sharing of consumption data can come at little to no computational or bandwidth cost for higher-level DNNC components and systems.

Moreover, data acquisition at the various levels of a multi-level control topography can be of various levels of granularity. Not all electrical power grid data sources require fine grain data monitoring, for example, a node associated with a transformer for a future subdivision may have no consumers and as such may need no monitoring (or perhaps minimal health-check type monitoring). In contrast, highly variable power sources, such as wind generators, can be more demanding and may best be served by employing millisecond (msec) data monitoring. To some degree, more data acquisition can result in a faster dynamic response to changes in consumption in an electrical grid and, as such, faster data acquisition is generally preferred. However, where data acquisition comes at some cost, ranking some data tasks more highly than others can result in a more beneficial cost-benefit result for an electrical distribution utility. Data can be acquired by a variety of sensors associated with a sensor package for a DNNC component or other data sources. This data can be of nearly any type or format. Various data types and formats can be useful in control of electrical distribution systems. It is readily appreciated that these data can be stored and manipulated.

It is further useful to distinguish between control nodes in a multi-level electrical distribution system topography and the electrical distribution grid itself. Control nodes, *e.g.*, DNNC components, in a multi-level electrical distribution system topography can be physically distinct from the electrical grid itself. In an aspect, control nodes can be logical as opposed to physical, such as where a plurality of components in different physical locations are grouped together to function as a logical control node. However, it can be the case that a control node and an electrical grid component can be co-located, such as where a DNNC component is integrated directly into an electrical grid entity, for example, a pole or pad transformer. In some cases, a node or DNNC component can be referred to as both a control system node and an electrical grid element, particularly where desirable control points and electrical elements are collocated such as at the edges of a distribution network, for example at a transformer between a primary distribution network and a residential street, *e.g.*, a secondary distribution network. In other cases, the distinct nature of the control node from electrical grid elements is more substantial and where such is the case, such difference is highlighted herein.

System 200 can include top-level DNNC component 210. Top-level DNNC component 210 can be the same as, or similar to, electrical distribution network control system component 110. System 200 can further include bottom-level DNNC components 230, 231, and 232. Bottom-level DNNC components 230,231, and 232 can be the same as, or similar to, electrical distribution network control system component 110. Top-level DNNC component 210 can be communicatively coupled to mid-level DNNC components 220, 221, and 222. Mid-level DNNC component 220 can be communicatively coupled to bottom-level DNNC components 230, 231, and 232. System 200 can include a plurality of mid-level DNNC components, *e.g.*, mid-level DNNC components 220, forming a longer chain of DNNC components from top-level DNNC component 210 to bottom-level DNNC component 230.

Mid-level DNNC component 220 can be the same as, or similar to, other DNNC components disclosed herein. Mid-level DNNC component 220 can represent a mid-level logical control node of an electrical distribution system. Typical conventional electrical distribution systems are devoid of any mid-level control elements, with electrical consumption data being transmitted from customer level equipment, *e.g.*, smart meters, to DCCs in a flat control topography as disclosed herein in the background section. Mid-level DNNC components, *e.g.*, 220, can be employed to provide control to progressive subsets of the electrical distribution grid control node superset. For example, bottom-level DNNC components can represent small groups of residences on a street, a first mid-level of DNNC components can represent a plurality of bottom-level DNNC components such as an entire street, a second mid-level of DNNC components can represent the entire neighborhood, a 3^{rd} level of DNNC components can represent the entire housing development, a 4^{th} level of DNNC components can represent a region of a city, and the top-level DNNC component can represent an entire city or region.

Mid-level DNNC component 220 can facilitate data bubble up and data push down as disclosed herein for other DNNC components. As such, multiple tiers of data handling can be facilitated to provide a distributed computing environment within the electrical distribution control system. For example, bottom-level DNNC components can process smart meter level data and bubble up aggregated data on power consumption which can be processed by the mid-level DNNC component, *e.g.*, 220, to bubble up, for example, load balancing data across a plurality of bottom-level DNNC components. Correspondingly, for example, a top-level DNNC component can push down data to a bottom-level DNNC component to shut down a transformer to accommodate repair work while pushing down rule data to a mid-level DNNC component to implement a new metric for data processing.

In an aspect, mid-level DNNC components, *e.g.*, 220, can accommodate inclusion of distributed power generation systems into an electrical distribution grid (not illustrated). This can be by way of a first dedicated bottom-level DNNC component or directly by way of the mid-level DNNC component. For example, a mid-level DNNC component can interface with a first bottom-level DNNC component related to a wind farm and further the mid-level DNNC component can interface with a second bottom-level DNNC component related to a factory. As a second example, a mid-level DNNC component can interface directly with a wind farm and further the mid-level DNNC component can interface with a first bottom-level DNNC component related to a factory.

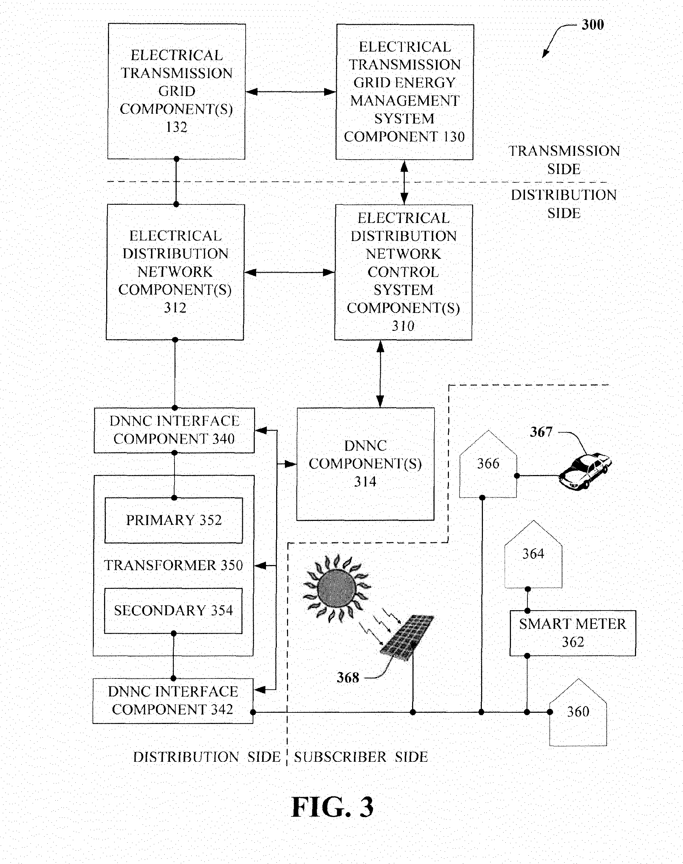

System 200 can further comprise DNNC interface component 240. DNNC interface component 240 can facilitate interaction between the electrical distribution grid control system , *e.g.*, by way of the various levels of DNNC components, and the electrical distribution grid. DNNC interface component 240 can be communicatively coupled to bottom-level DNNC component 230. DNNC interface components can also be connected to other levels of the distribution grid control network. DNNC interface components can include components that are energetically connected to the electrical distribution grid (not illustrated at Fig. 2, *see* for example, Fig. 3 at 340 and 342). In one embodiment, DNNC interface component 240 can comprise a sensor monitoring the electrical distribution grid. In another embodiment DNNC interface component 240 can be a primary-side or secondary-side protection circuit for a distribution transformer. In a further embodiment, DNNC interface component 240 can comprise a sensor and relay switch, *e.g.*, to detect an undesirable condition at a transformer and to disconnect the transformer to protect it from the undesirable condition. Various other embodiments comprising sensors and electrical grid interface elements are considered within the scope of the presently disclosed subject matter but are not further enumerated for brevity and clarity. DNNC interface components 241 and 242 can be the same as, or similar to, DNNC interface component 240.

System 200 can also comprise a communicative coupling between top-level DNNC component 210 and EMS component 130. This communicative coupling can facilitate accessing EMS data relative to the transmission grid by the DNNC components of system 200. Further, the communicative coupling facilitates access to distribution control grid data and subscriber level data by EMS 130. As disclosed hereinabove, access to transmission, distribution, and subscriber level data can be beneficial to an electrical grid. As a non-limiting example, each bottom level DNNC component, *e.g.*, 230-232 can track the number and usage of PEVs connected in those sections of the distribution grid. This information can be processed to generate a predictive forecast of energy access related to a current level of PEV saturation. This information can be bubbled up through the mid-level DNNC component 230 (and similarly for other branches through 222 and 221) to top-level DNNC component 210. Top-level DNNC component 210 can further process the PEV forecast data to compute long range energy consumption forecasts based on future PEV market saturation predictions. This information can be shared with the transmission network and can be applied in transmission grid models to optimize development and allocation of transmission grid resources. Data related to the expected development of the transmission grid can used to compute future energy contract pricing as a function of PEV saturation. This pricing information can be returned to the top-level DNNC component 210 which can further process the data to optimize energy block purchases and can push the data down in the form of incentives to the subscriber, *e.g.*, offering energy rebates for purchasing a PEV, etc.

FIG. 3 is a block diagram illustrating an exemplary system 300 having an electrical distribution network control system communicatively coupled to an electrical transmission grid energy management system in accordance with aspects of the disclosed subject matter. System 300 can be the same as, or similar to, system 100 or 200. System 300 can include electrical distribution network control system component(s) 310. In one embodiment, electrical distribution network control system component(s) 310 can include a top-level DNNC component (not illustrated) and one or more mid-level DNNC components (not illustrated). Further, electrical distribution network control system component(s) 310 can be communicatively coupled to one or more bottom-level DNNC components 314, which can be the same as, or similar to, the corresponding components of system 200. Further, system 300 can include EMS 130 and ECC 132 as disclosed in system 100. Moreover, electrical distribution network control system component(s) 310 can be communicatively coupled to electrical distribution grid component(s) 312 in a manner that is the same as, or similar to, that described for components 110 and 112 with regard to Fig. 1.

DNNC component 314 can be communicatively coupled to DNNC interface components 340, 342, and to transformer 350. Transformer 350 can comprise a primary portion 352 and a secondary portion 354 relating to the primary windings and secondary windings of transformer 350 respectively. Transformer 350 is illustrated in Fig. 3 as a single phase residential distribution transformer but is not so limited with respect to the present disclosure and can generally represent any transformer including single phase, triple phase, oil, dry, pole- or pad-mount, solid- or amorphous- core, or any other type of transformer without departing from the reasonable scope of the present disclosure. Further, DNNC interface components 340 and 342 are illustrated as external to transformer 350, however they are not so limited and can be co-located with transformer 350, be an integral part of transformer 350, etc.

DNNC interface component 340 can be energetically connected to electrical distribution grid components(s) 312 and primary 352 of transformer 350. Correspondingly, DNNC interface component 342 can be energetically connected to secondary 354 of transformer 350 and by way of a mains connector to the several components on the subscriber side, *e.g.*, components 360 to 368. DNNC component 314 can communicate with DNNC interface components 340 and 342 to dynamically interact with the electrical distribution grid. As a non-limiting example, DNNC interface components 340 and 342 can include relays that can be triggered to isolate transformer 350 from the electrical distribution grid as a result of s signal from DNNC component 314 or as a result of a detected condition at either DNNC interface component 340 or 342. As another non-limiting example, DNNC interface components 340 or 342 can dynamically switch between voltage taps where transformer is a multi-tap transformer, *e.g.*, an on-load primary or secondary winding tap transformer, to compensate for loading of the transformer.

On the subscriber side of system 300, various subscriber-level components are illustrated including a home with a basic electrical meter 360, a home 364 with a smart meter 362, a house 366 with a PEV 367, and a solar panel distributed generation source 368. Each of these subscriber-level components, *e.g.*, 360 to 368, can be energetically connected to DNNC interface component 342 and can receive energy therefrom or supply energy thereto.

In one embodiment, DNNC interface component 342 can make energy access data related to subscriber-level components, *e.g.*, 360 to 368, accessible to DNNC component 314 which can process and/or bubble up data to electrical distribution network control system component(s) 310 and EMS 130. As such, the data can be employed in refining system optimization. As a non-limiting example, on a sunny day, solar panel 368 can supply enough power for non-peak usage by 366, 364, and 360, and as such, DNNC component 314 can instruct DNNC interface component to go into an "open-switch" mode and disconnect the several subscriber-side elements from transformer 350. Further, where there is no-load loss through transformer 350 as a result of the disconnection from the subscriber-side elements, DNNC 340 can be instructed to go into an "open-switch" mode and disconnect transformer 350 from the distribution grid to limit the no-load losses. Continuing the example, where the weather clouds up and the distributed generation dips below the needed level, DNNC component 314 can bring transformer 35 back on the grid and connect it to the subscriber-side elements by causing DNNC interface components 340 and 342 to go into a "closed-switch" mode and can further adjust the output tap of transformer 350 to account for the energy being provided by solar panel 368.

Further, data can be accessed from smart meter 362 by DNNC component 314 and can facilitate additional electrical grid management aspects. Smart meter 362 data can be accessed either by way of DNNC interface component 342, *e.g.*, by power line communication, from a remote store, *e.g.*, an online database, or directly by communication with DNNC component 314 by way of a wired or wireless connection (not illustrated). Data from smart meter 362 can relate to subscriber side energy access, *e.g.*, average energy access, peak energy access, minimum energy access, time dependant energy access, total energy access, etc. Additionally, data from smart meter 362 can relate to energy access by select subscriber equipment(s) (not illustrated) where the subscriber equipment provides access to energy access data to smart meter 362. For example, a smart dryer can provide energy access data to smart meter 362 which can relay that information to DNNC component 314, etc.

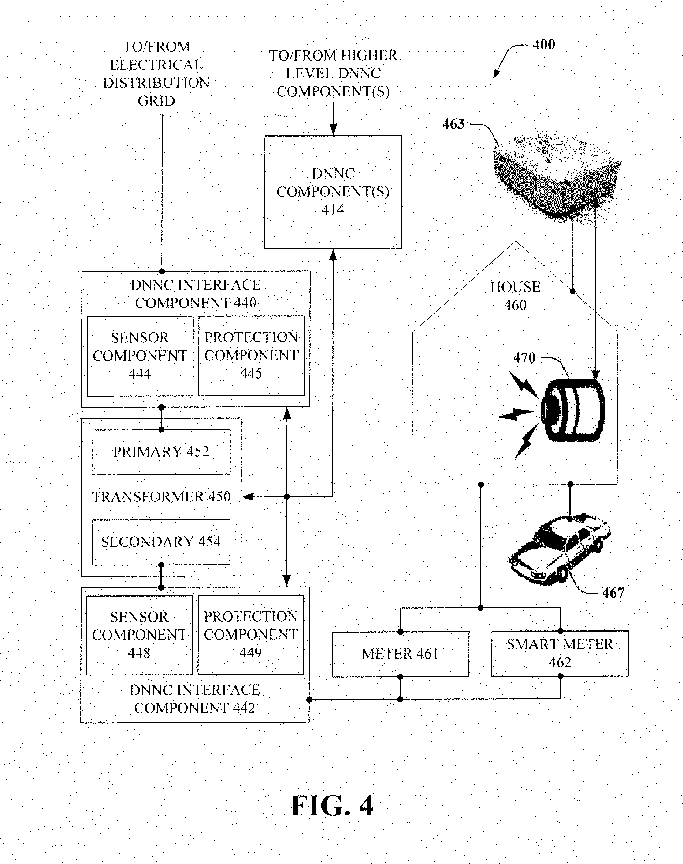

FIG. 4 illustrates a block diagram of an exemplary system 400 having an electrical distribution network control system communicatively coupled to subscriber side components in accordance with aspects of the disclosed subject matter. System 400 can include DNNC component(s) 414 that can be the same as, or similar to, DNNC component(s) 314 from Fig. 3. Similarly, System 400 can include Transformer 450 having primary 452 and secondary 454 and DNNC interface components 440 and 442 which can each be the same as, or similar to, the corresponding components in Fig. 3. DNNC component(s) 414 can be communicatively coupled to DNNC interface components 440, 442, and Transformer 450. DNNC interface component 440 can be energetically connected with primary 452 and similarly, DNNC interface component 442 can be energetically connected with secondary 454. Additionally, DNNC interface components 440 and 442 can each comprise a sensor component, *e.g.*, 444 and 448, and a protection component, *e.g.*, 445 and 449. Sensor components 444 and 448 can be related to electrical grid conditions, such as, temperature, humidity, current flow, voltage, fault sensing, etc. Protection components 445 and 449 can function to protect the transformer or the distribution grid from undesirable conditions, *e.g.*, fault conditions, out of range operating conditions, etc. Protection components 445 and 449 can be controlled ether directly by the corresponding DNNC interface component, 440 or 442, by DNNC component(s) 414 or combinations thereof.

System 400 can further include a basic electrical meter 461 and/or a smart meter 462. The inclusion of smart meter 462 can proved additional granularity to energy access data that can be provided by DNNC interface component 442, as previously disclosed with regard to smart meter 362 in relation to Fig. 3. System 400 can also include house 460. House 460 can allow for energetic connection to PEV 467 and hot tub 463. Hot tub 463 can further be communicatively coupled to smart appliance module (SAM) component 470, for example, hot tub 463 can be connected to mains power via SAM component 470, hot tub 463 can include SAM component 463 as an integral component, hot tub 463 can be coupled by a wired or wireless connection to SAM component 470, etc. SAM component 470 can facilitate access to energy access data. In one embodiment, SAM component 470 employs an extensible data access model to facilitate access to energy access data, *e.g.*, extensible markup language (XML), Open C++, Felix, etc.

As compared to a conventional subscriber side equipment, inclusion of a smart meter 462, SAM component 470 or intelligent equipment, such as PEV 467 can facilitate accessing vastly larger quantities of energy access data. Smart meter 462 can typically provide access to substantially more energy access information that basic meter 461. As such, energy access can be monitored with "electric meter" granularity, the sum of all equipment served by smart meter 462 where no other smart appliances are employed. However, even finer levels of granularity are possible by employing intelligent appliances, *e.g.*, smart lamps, smart heaters, smart cooling, smart hot tubs, smart stoves, smart food storage, smart landscape lighting, etc. or by adding intelligence to "dumb" appliances by coupling them to a SAM component 470. For example, where "dumb" hot tub 463 is coupled to SAM component 470, energy access data can be accessed.

Smart devices and SAM component connected devices further can facilitate controlled energy access in addition to simply looking at the energy access data. A smart device or SAM component connected equipment can respond to dynamically changing energy grid conditions. For example, SAM component 470 can turn hot tub 463 on when energy per unit does not exceed a predetermined cost. As a second example, PEV 467, including smart control system, can participate in a shared charging scheme with other PEVs serviced by transformer 450 to reduce peak load. Moreover, as previously disclosed, data can be processed and/or bubbled up and pushed down to dynamically adapt the distribution grid and/or the conditions for accessing energy on the distribution grid, *e.g.*,, market rate pricing, scheduling, prioritization, sharing, distributed generation, etc.

In a non-limiting example, a subscriber can return home at 6pm, peak load time. Subscriber can desire to soak in the hot tub. Based on subscribers history and preferences, SAM component 470 has heated hot tub 463 during off-peak rates. Because it is 6pm and the customer is charged peak rates, the hot tub has been turned off by SAM 470 and is slowly cooling. Subscriber plugs in their PEV 467 which happens to be at 85% of full charge. Subscriber can have indicate that they will use the hot tub. In response, SAM component 470 can indicate that the grid is at peak rate but that the cost can be offset by depleting the charge on the PEV to compensate for the additional energy needed to maintain the temperature of hot tub 463. Thus, PEV 467 can serve as a source of energy during the peak load time and the subscriber can enjoy their hot tub. The PEV can then be recharged late in the evening during off peak hours. Information relating to the rate plan for energy access can be passed to the smart devices and SAM components by way of DNNC component 414, while reducing energy consumption by draining the PEV can be negotiated on the subscriber side between PEV 467 and SAM component 470.

In a variation of this embodiment, PEV 467 can belong to a home other than 460 and can source the additional energy to house 460 to allow the hot tub to run without drawing additional energy from the grid. In a situation like this, smart equipment can employ various methods for accounting for the energy. For example, the PEV can source energy for a credit to the utility that can resell it to house 460 at market rate. As a second example, the PEV can source energy for a fee from house 460 directly. As a third example, PEV can source energy for a non-monetary benefit, such as, higher priority ranking for a future energy access, etc.

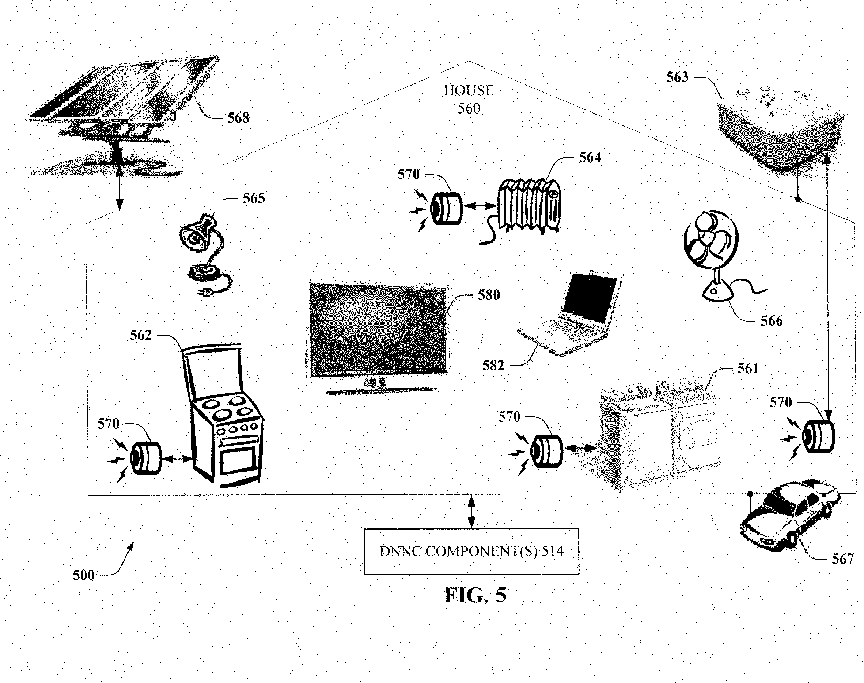

FIG. 5 is a graphic illustration of a non-limiting exemplary system 500 having several subscriber side components in accordance with aspects of the disclosed subject matter. System 500 can include the following subscriber side components: washer and dryer 561, stove 562, hot tub 563, electric heater 564, lamp 565, fan 566, PEV 567, and solar panel 568. Further house 560 of system 500 can include a plurality of SAM components 570. House 560 can be communicatively coupled to DNNC components 514 which can be the same as, or similar to, DNNC components 414 and 314. As is illustrated, high consumption subscriber equipment can be communicatively coupled to SAM components 570. Further, lower consumption subscriber equipment can simply be connected to the smart meter (not illustrated) of house 560. Thus, total energy consumption of house 560, as accessed at the smart meter, can be adjusted for reportable energy consumption from each of the several SAM components 570 to compute energy consumption from things like lamps, fans, radios, night lights, alarm systems, clocks, etc., without having to invest additional resources and cost into making low energy draw devices smart or adding a SAM component 570 to them, though they are not so limited and they can be made smart where desirable. Further, certain equipment such as solar panel 568 and PEV 567 are likely to come as smart equipment from the factory and would not need to be connected to a SAM component 570 to allow access to related energy access data or control.

House 560 can further include display 580 and interactive device 582, *e.g.*, a computer, laptop, smartphone, mobile device, etc. that can facilitate subscriber access to information and control of smart equipment or SAM component connected equipment. For example, display 580 can display the current electrical rates, the instant energy consumption, the running total for a monthly bill, high energy draw devices, and nearly a limitless among of energy access related data to the subscriber. Similarly, interactive device 582 can provide the same, or similar, information and can further enable the subscriber to interact with energy access models. For example, a subscriber can set priorities, schedule energy access events, model usage scenarios, etc. by way of interactive device 582. Further, utilities can present incentives or programs to subscribers in real time, or near real time, by way of display 580 or interactive device 582. For example, discounts can be offered for scheduling energy access, for purchasing energy blocks in advance, for being the lowest energy consumer on the node, etc. As another non-limiting example, during an emergency, customers can be notified that the grid is being reconfigured to supply power to high priority regions and that non-critical subscriber equipment are being ordered to turn off, such as, power can be routed to a hospital in an emergency and rather than throwing a neighborhood into a black out, the utility can order all equipment to shut off except for heat/cooling systems, medical devices, and 1000-watts of lighting. It becomes quickly apparent that highly granular control of subscriber side equipment can be important in emergency situations, in optimizing energy use, and in minimizing the need for additional transmission grid resources.

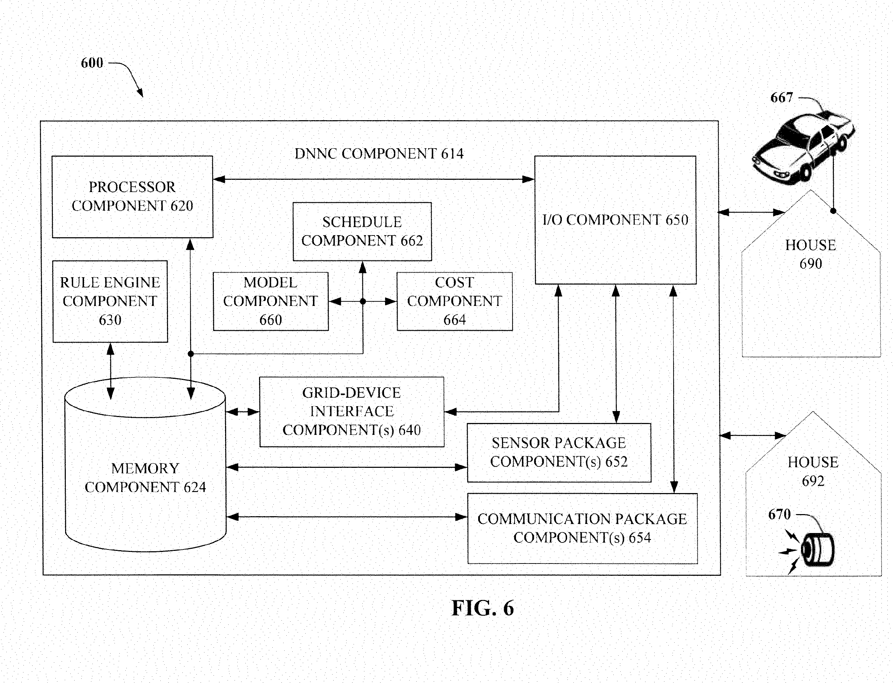

FIG. 6 is a block diagram illustrating a distribution network node controller component 614 for a system 600 having a hierarchical control topography in accordance with aspects of the disclosed subject matter. Distribution network node controller component 614 can be the same as, or similar to, the various DNNC components of systems 200, 300, 400, or 500. DNNC component 614 can include a processor component 620 that can be any of various commercially available processors.

DNNC component 614 can further include a memory component 624 that can include one or more of various types of short-term or long-term storage mediums. For example, memory component 624 can include RAM, ROM, Flash, hard disk, optical media, registers, etc. DNNC component 614 can further include rule engine component 630 that is functional to access or generate rules or logic pertaining to the control of electrical distribution systems, which can include data acquisition, data analysis, data processing, decision making processes, or control of electrical grid components. Moreover, DNNC component 614 can include grid-device interface component(s) 640. Grid-device interface component(s) 640 can be components that are adapted to interact with electric distribution grid devices, for example, DNNC interface components 340, 342, 440, and 442.

Additionally, DNNC component 614 can include an input/output (I/O) component 650. I/O component 650 is operable to allow bidirectional communication with at least one other DNNC component. I/O component 650, further, can be communicatively coupled to sensor package 652 or communication package 654. Sensor package 652 can include signaling interfaces to one or more sensors related to the control of the electric distribution system as disclosed herein. Sensor package 652, for example, can include an interface to a current sensor, a voltage sensor, a phase sensor, a temperature sensor, an anemometer, a strain gauge sensor, a barometer, a fault sensor, a lighting detector, etc., such as sensor components 444 and 448. Communications package 654 can include an interface to one or more communication modalities functional to communicate with other DNNC components of an electric distribution system or with other external equipment or devices, such as with smart equipment like PEV 667 and/or SAM components like SAM component 670. For example, communications package 654 can include an 802.11 type radio, a cellular phone type radio, a powerline modulated type communications component, a fiber-optic communications component, etc.

DNNC component 614 can further include model component 660. Model component 660 can process data related to energy access models and distribution grid configuration models. Model component 660 can function to run optimization algorithms, for example, to optimize topography of portions of a distribution grid, optimize a energy access for smart homes, etc. As a non-limiting example, house 690 can communicate data related to energy consumption preferences based on parameters selected by a subscriber. Subscriber can indicate that they are considering the purchase of PEV 667 and would like an analysis of how that can impact energy access given the particular driving habits of the subscriber. Model component can process the information to provide data to the subscriber (for example, by way of an interactive device) related to the inquiry.

DNNC component 614 can comprise schedule component 662. Schedule component 662 can process data related to scheduling or delaying energy access events. Subscribers can designate scheduled energy access events to facilitate optimization of the electrical grid. For example, a residential subscriber can indicate that they will consume significantly more power for the month of December because they enjoy large holiday light displays. This future use information can allow a utility to purchase energy by contract at a lower rate than buying additional energy on the spot market. As such, the savings can be passed along to the subscriber as an incentive to schedule energy access events. As a second example, a commercial subscriber can operate an amusement park and see more crowds in the summer than winter and as such has a seasonal energy access event that can be scheduled at a contract rate by way of schedule component 662. As a third example, schedule component 662 can be employed to orchestrate charging of PEVs in a neighborhood including parameters such as docked PEV power level, typical usage of each PEV, designated subscriber preferences relating to the charging of a PEV, instant and projected distribution grid optimization, anticipated charging times, etc. By analyzing the parameters charging of the PEVs can be delayed in a manner that provides for typical subscriber PEV use, efficient charging of the PEVs, lowest subscriber cost, and minimized strain on the electrical distribution grid.

DNNC component 614 can comprise cost component 664. Cost component 664 can process data related to cost structures for energy access. Cost component 664 can present market rate pricing data to subscribers. For example, given the instant energy consumption and the cost of that energy, a price per unit energy can be computed. Further, given the incremental costs to the utility to purchase more blocks of energy or sell off unused blocks of energy to the transmission network, a change in price per unit can be computed for a subscriber. Where the utility is nearly optimized for the contracted level of energy consumption from a transmission network, it can be expensive to purchase additional energy and this premium in cost and information related to the cost differential can be passed on to the customer. Similarly, where the utility is below optimal usage for contracted energy, it can be less expensive to provide more energy to a subscriber and this information on the price differential can be accessed by the subscriber. Further, where the utility has a sufficient margin of energy, some of the excess capacity can be sold back to the transmission grid which can result in lower subscriber costs, which can be communicated to the subscribers allowing them to decrease consumption and realize a savings by generating a sufficient overhead.

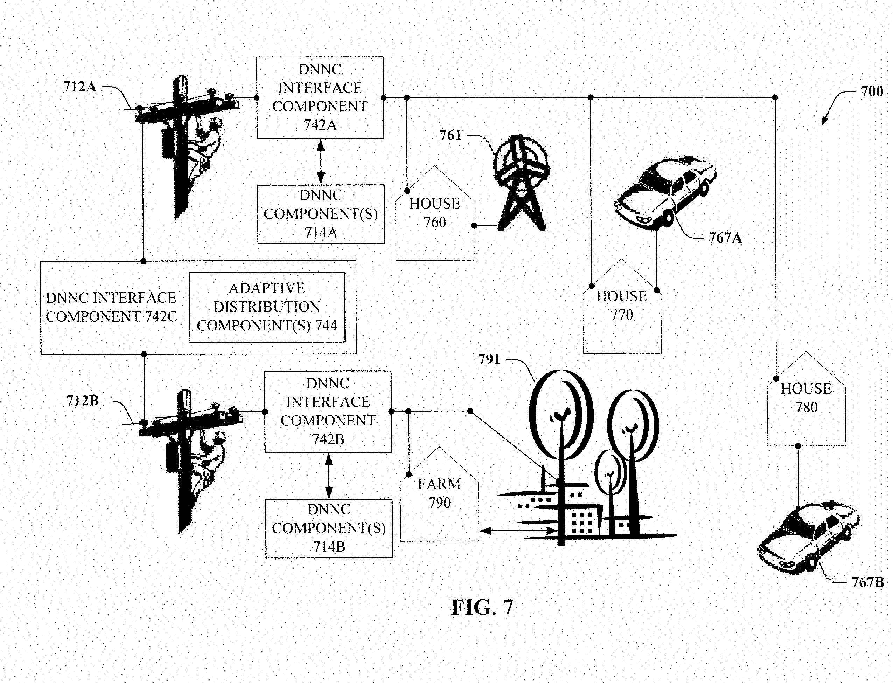

FIG. 7 illustrates a block diagram of an exemplary system 700 having an electrical distribution network control system communicatively coupled to subscriber side components in accordance with aspects of the disclosed subject matter. System 700 can include a first energy distribution system node 712A and a second energy distribution system node 712B. Energy distribution system nodes 712 A and 7128 can be portions of an electrical energy distribution system distributing energy acquired from an energy transmission system by way of an ECC, *e.g.*, ECC 132 of system 100.

First energy distribution system node 712A can be energetically connected to DNNC interface component 742A which can be communicatively coupled to DNNC component(s) 714A. Similarly, second energy distribution system node 712B can be energetically connected to DNNC interface component 742B which can be communicatively coupled to DNNC component(s) 714B. DNNC interface components 742 A and 742B can be the same as, or similar to, DNNC interface components 342 and 442 as described in relation to systems 300 and 400 respectively. Further, DNNC component(s) 714A and 714B can be the same as, or similar to, the several DNNC component(s) from systems 200, 300, 400, 500, and 600.

First energy distribution system node 712A can be energetically connected to DNNC interface component 742C. Similarly, second energy distribution system node 712B can also be energetically connected to DNNC interface component 742C. DNNC interface component 742C can be the same as, or similar to, DNNC interface components 742A and 742B. DNNC interface component 742C can further comprise adaptive distribution component(s) 744. In one embodiment, DNNC interface component 742C can receive communications from DNNC component(s) 714A or 714B, *e.g.*, wirelessly, by power line communication, etc.

First energy distribution system node 712A can supply energy access from the electrical distribution grid to house 760, house 770, and house 780. PEV 767A can be connected to the electrical distribution grid, for example by connecting through house 770. Similarly, PEV 767B can connect to the electrical distribution grid, for example through house 780. Both PEV 767A and 767B can provide energy to the distribution grid by discharging their batteries or can drain energy from the distribution grid by charging their batteries. Small wind turbine 761 can be connected to the electrical distribution grid as a distributed generator, for example, through house 760.

Second energy distribution system node 712B can supply energy access to farm 790. Farm 790 can operate a large wind farm 791. Wind farm 791 can energetically connect to the electric distribution grid, for example, through second energy distribution system node 712B.

System 700 can illustrate demand response, scheduling, and adaptive distribution networks. As a first non-limiting example, as house 780 consumes more power, it can discharge stored energy from PEV 767B rather than consume additional energy from the distribution grid. Further, when PEV 767B is depleted, energy can be shared through either house 760, such as by allowing energy generated by wind turbine 761 to flow to house 780, or from house 770, such as by allowing stored energy from PEV 767A to flow to house 780. This can occur during peak energy consumption windows to minimize the impact to the electrical distribution grid. Where energy demands continue to beyond the compensatory effects of depleting PEVs 767A and 767B and exceed the generating power of wind turbine 761, additional energy can be sourced from the electrical distribution grid through first energy distribution system node 712A.

As DNNC component(s) 714A detect the need for more energy in the above example, they can communicate with DNNC component(s) 714B and query available power. In DNNC component(s) 7148 indicates that wind farm 791 is generating surplus power, signals can be sent to DNNC interface component 742C such that adaptive distribution component(s) 744 cause an energetic connection between second energy distribution system node 7128 and first energy distribution system node 712A to allow energy to flow from wind farm 791 to house 780. Where DNNC component(s) 7128 indicates that wind farm 791 is not generating surplus energy, second energy distribution system node 712B and first energy distribution system node 712A can remain isolated. Energy can then be drawn from the electric distribution grid where additional energy can be safely supplied through the grid to house 780.

Further, optimization methods can be performed to induce house 780 to consume less energy. This can include adjusting the cost of power supplied to house 780, or time shifting or scheduling energy access events. For example, where house 780 has the heat on high, has all the lights on in the house, is trying to recharge depleted PEV 767B, has left the shower running on hot, is baking a turkey, running the hot tub, and is washing and drying clothes at a peak load time, rates can be increased to induce the subscriber to perhaps shut off the hot tub and shower to save money and energy. Further, for example, time shifting can be suggested to move the clothes washing and drying into an after peak time frame to further reduce peak energy consumption, and charging of PEV 767B can be scheduled for 3am such that it is ready for use by 7am. Additionally, notification can be sent that an unusual number of lights are on in house 780, which can alert subscriber to the wasted energy of lights on in unoccupied rooms. These techniques can significantly reduce the demand for energy from house 780 and can result in a energy access condition that does not require additional energy to be sourced from the transmission grid.

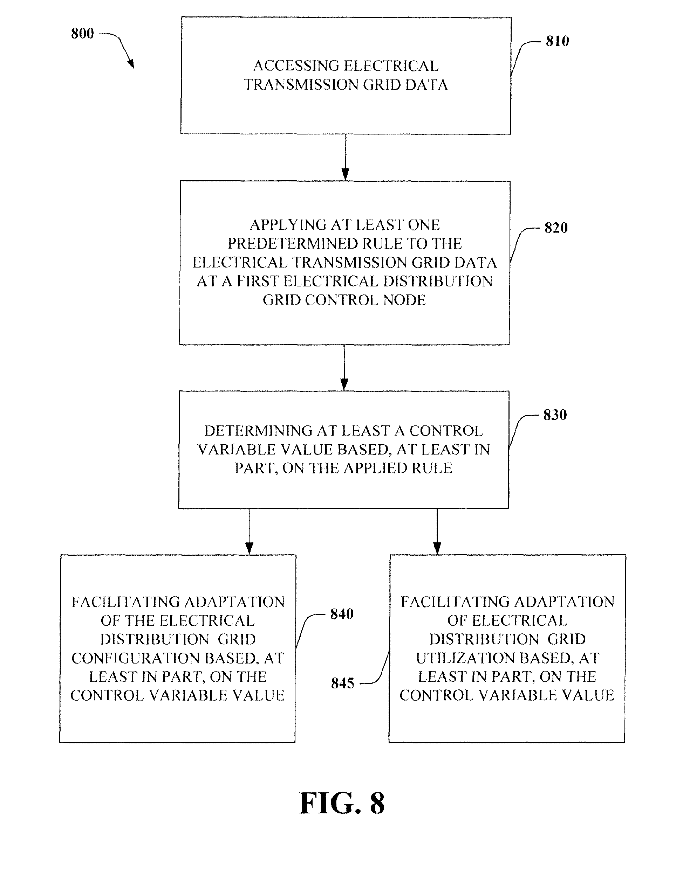

In view of the example system(s) described above, example method(s) that can be implemented in accordance with the disclosed subject matter can be better appreciated with reference to flowcharts in FIG. 8 to FIG. 10. For purposes of simplicity of explanation, example methods disclosed herein are presented and described as a series of acts; however, it is to be understood and appreciated that the claimed subject matter is not limited by the order of acts, as some acts may occur in different orders and/or concurrently with other acts from that shown and described herein. For example, one or more example methods disclosed herein could alternatively be represented as a series of interrelated states or events, such as in a state diagram. Moreover, interaction diagram(s) may represent methods in accordance with the disclosed subject matter when disparate entities enact disparate portions of the methodologies. Furthermore, not all illustrated acts may be required to implement a described example method in accordance with the subject specification. Further yet, two or more of the disclosed example methods can be implemented in combination with each other, to accomplish one or more features or advantages herein described. It should be further appreciated that the example methods disclosed throughout the subject specification are capable of being stored on an article of manufacture to allow transporting and transferring such methods to computers for execution, and thus implementation, by a processor or for storage in a memory.

FIG. 8 is exemplary flowchart of procedures defining a method 800 facilitating coordination between an electrical distribution control system and an electrical transmission grid in accordance with aspects of the disclosed subject matter. At 810, electrical transmission grid data can be accessed. This electrical transmission grid data can be related to the condition and availability of energy from the transmission grid, *e.g.*, contract cost, spot cost, sale price, environmental conditions, limitations on energy supply, etc. At 820, at least one predetermined rule or logic can be applied to the accessed electrical transmission grid data at a first distribution grid control node. Rules can be generated by DNNC components of an electrical distribution control system or can be pushed out to selected control nodes through DNNC components. For example, a pricing scheme rule can be pushed out to all control nodes from a corporate server through a top-level DNNC component. As another example, a distribution rule can be generated for electrical customers associated with a bottom-level DNNC component by said DNNC component. The application of these rules and logics to electrical transmission grid data can allow for highly tailored control of the electrical distribution grid with regard to energy consumption and demand response as well as with regard to dynamically adapting distribution grid topography. At 830, a control variable value can be determined from application of the rule at 820.

The determined control variable value at 830 can be employed to affect the control of the electrical distribution grid. At 840, dynamic reconfiguration of the electrical distribution grid can be indicated based, at least in part, on the control variable value from 830. At this point method 800 can end. For example, application of a topographical optimization rule at 820 to transmission grid data indicating limited availability of energy during a heat wave can indicate that the distribution grid be reconfigured to energetically connect more distributed generators to the distribution grid at 840.

Further, at 845, the determined value from 830 can be employed to effect the utilization of energy on the electrical distribution grid. At this point method 800 can end. For example, application of a costing rule at 820 to transmission grid data indicating limited availability of energy during a heat wave can indicate that market rate costs for energy will rise where the supply of energy from the transmission grid is limited which can result in lower amounts of consumed energy at the higher price based on market forces such as supply and demand. As a second example, application of a modeling rule at 820 to transmission grid data indicating limited availability of energy during a heat wave can indicate that time shifting low priority energy access events to the cool pre-dawn hours when cooling energy is at the lowest and more aggressive use of distributed energy storage mechanisms, such as discharging PEVs to 10% rather that to 50%, can help minimize the effects of the shortage of energy from the transmission system.

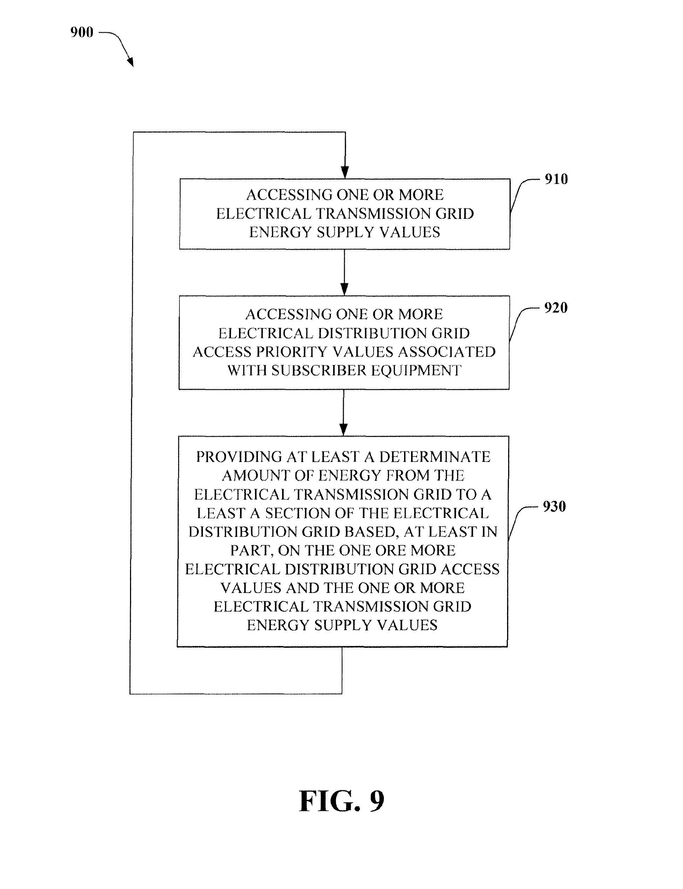

FIG. 9 is an exemplary flowchart of procedures defining a method 900 facilitating coordination between an electrical distribution control system and an electrical transmission grid in accordance with aspects of the disclosed subject matter. At 910, an electrical transmission grid energy supply value can be accessed. At 920, electrical distribution grid access priority values can be accessed. Access priority values can be associated with a ranking of the order for energetically connecting subscriber equipment to the electrical grid. As such, higher access priority valuation can indicate that a subscriber equipment be connected to the electrical grid even at the highest cost, while a low access priority valuation can indicate that energy connection is on a case-by-case basis even when energy costs are minimal. For example, life saving medical equipment can be given high priority values, while landscape lighting can be given lower access priority values. Access priority values can be based on subscriber defined parameters.

At 930, a determinate amount of energy can be provided from the transmission grid to the distribution grid. This determinate amount of energy can be based, at least in part, on the transmission grid energy supply values and the access priority values. For example, a hospital can have very high access priority values and can receive a portion of energy from the transmission grid through the distribution grid above before energy is made available to lower access priority value subscriber equipment. At this point method 900 can loop back to 910. In an aspect, the finer the granularity of the control system, *e.g.*, employing smart appliances and/or SAM components, can facilitate directing energy flow to the highest priority subscriber equipments for the available amount of transmission grid energy. In a less dire example, where the transmission grid energy supply value indicates a surplus of energy, all access priority values can qualify for an energy access event, *e.g.*, where there is plenty of energy all uses of that energy are acceptable.

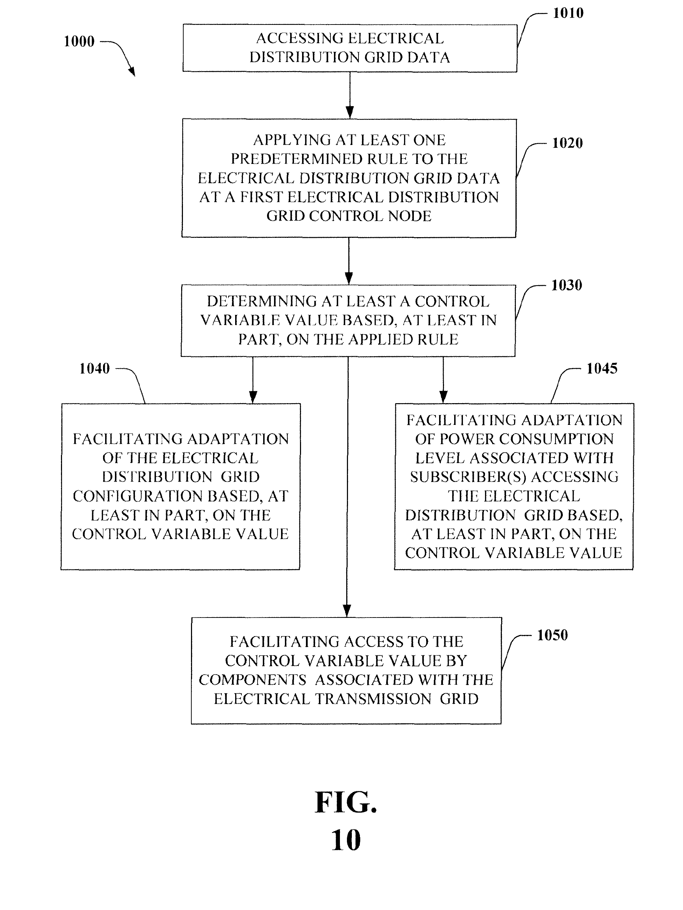

FIG. 10 illustrates a flowchart of procedures from a method 1000 facilitating hierarchical control in an electrical distribution network in accordance with aspects of the disclosed subject matter. At 1010, electrical distribution grid data can be accessed. Electrical distribution grid data can be related to the utilization and distribution of energy in the electrical distribution system, *e.g.*, values indicating areas of insufficient energy density, determinations of efficient energy utilization for demand response by distributed generation sources, determinations of efficient energy utilization for demand response by sharing, determinations of efficient energy utilization by scheduling and/or delaying energy consumption, etc. At 1020, at least one predetermined rule or logic can be applied to the accessed electrical distribution grid data at a first distribution grid control node. Rules can be generated by DNNC components of an electrical distribution control system or can be pushed out to selected control nodes through DNNC components as disclosed herein. The application of these rules and logics to electrical distribution grid data can allow for highly tailored control of the electrical distribution grid with regard to energy consumption and demand response as well as with regard to dynamically adapting distribution grid topography. At 1030, a control variable value can be determined from application of the rule at 1020.

The determined control variable value at 1030 can be employed to affect the control of the electrical distribution grid. At 1040, dynamic reconfiguration of the electrical distribution grid can be indicated based, at least in part, on the control variable value from 1030. At this point method 1000 can end. For example, application of a topographical optimization rule at 1020 to distribution grid data indicating high thermal stress on a distribution transformer can indicate that a second distribution transformer should be energetically connected to the distribution grid to reduce the strain on the thermally stressed distribution transformer at 1040.

Further, at 1045, the determined value from 1030 can be employed to effect the utilization of energy on the electrical distribution grid. At this point method 1000 can end. For example, application of a costing rule at 1020 to distribution grid data indicating underutilized energy resources can indicate that price per unit energy be decreased to increase demand for the resource.

Moreover, at 1050, the determined value from 1030 can be made accessible to the electrical transmission grid. At this point method 1000 can end. Making distribution grid data available to the transmission grid can improve the development of the transmission grid. For example, application of a modeling rule at 1020 to distribution grid data indicating well utilized energy resources in the distribution grid can indicate that additional generation capacity on the transmission grid can be delayed.

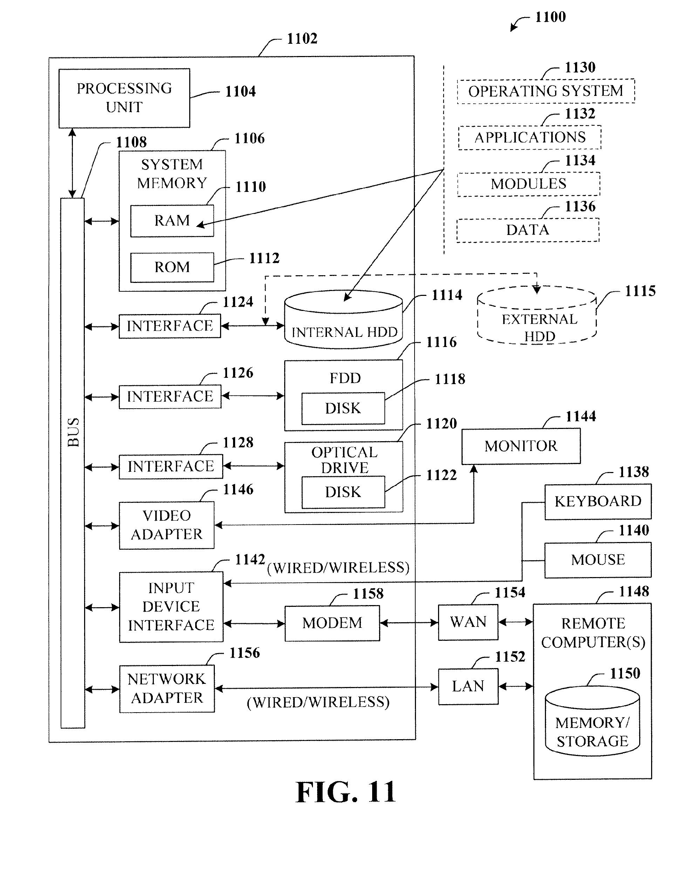

Referring now to FIG. 11, there is illustrated a block diagram of an exemplary computer system operable to execute the disclosed architecture. In order to provide additional context for various aspects of the disclosed subject matter, FIG. 11 and the following discussion are intended to provide a brief, general description of a suitable computing environment 1100 in which the various aspects of the disclosed subject matter can be implemented. Additionally, while the disclosed subject matter described above may be suitable for application in the general context of computer-executable instructions that may run on one or more computers, those skilled in the art will recognize that the disclosed subject matter also can be implemented in combination with other program modules and/or as a combination of hardware and software.

Generally, program modules include routines, programs, components, data structures, *etc.,* that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the disclosed subject matter may also be practiced in distributed computing environments where certain tasks are performed by remote processing devices that are linked through a communications network. In a distributed computing environment, program modules can be located in both local and remote memory storage devices. As non-limiting examples, electrical distribution and transmission system rules can be accessible by way of the world wide web (Web), on corporate servers, on the DNNC components(*e.g.*, 110,210, 310, etc.), on EMS 130, etc.

Computing devices typically include a variety of media, which can include computer-readable storage media and/or communications media, which two terms are used herein differently from one another as follows. Computer-readable storage media can be any available storage media that can be accessed by the computer and includes both volatile and nonvolatile media, removable and non-removable media. By way of example, and not limitation, computer-readable storage media can be implemented in connection with any method or technology for storage of information such as computer-readable instructions, program modules, structured data, or unstructured data. Computer-readable storage media can include, but are not limited to, RAM, ROM, EEPROM, flash memory or other memory technology, CD ROM, digital versatile disk (DVD) or other optical disk storage, magnetic cassettes, magnetic tape, magnetic disk storage or other magnetic storage devices, or other tangible and/or non-transitory media which can be used to store desired information. Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, *e.g.*, a carrier wave or other transport mechanism, and include any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 11, the exemplary environment 1100 for implementing various aspects of the disclosed subject matter includes a computer 1102, the computer 1102 including a processing unit 1104, a system memory 1106 and a system bus 1108. The system bus 1108 couples to system components including, but not limited to, the system memory 1106 to the processing unit 1104. The processing unit 1104 can be any of various commercially available processors. Dual microprocessors and other multi-processor architectures may also be employed as the processing unit 1104.

The system bus 1108 can be any of several types of bus structure that may further interconnect to a memory bus (with or without a memory controller), a peripheral bus, and a local bus using any of a variety of commercially available bus architectures. The system memory 1106 includes read-only memory (ROM) 1110 and random access memory (RAM) 1112. A basic input/output system (BIOS) is stored in a non-volatile memory 1110 such as ROM, EPROM, EEPROM, which BIOS contains the basic routines that help to transfer information between elements within the computer 1102, such as during start-up. The RAM 1112 can also include a high-speed RAM such as static RAM for caching data.

The computer 1102 further includes an internal hard disk drive (HDD) 1114, *e.g.,* EIDE, SATA, which internal hard disk drive 1114 may also be configured for external use in a suitable chassis, *e.g.*, 1115, a magnetic floppy disk drive (FDD) 1116*, e.g.*, to read from or write to a removable diskette 1118, and an optical disk drive 1120, *e.g.*, reading a CD-ROM disk 1122 or, to read from or write to other high capacity optical media such as the DVD. The hard disk drive 1114 (or 1115), magnetic disk drive 1116 and optical disk drive 1120 can be connected to the system bus 1108 by a hard disk drive interface 1124, a magnetic disk drive interface 1126 and an optical drive interface 1128, respectively. The interface 1124 for external drive implementations includes at least one or both of Universal Serial Bus (USB) and IEEE1394 interface technologies. Other external drive connection technologies are within contemplation of the subject matter disclosed herein.

The drives and their associated computer-readable media provide nonvolatile storage of data, data structures, computer-executable instructions, and so forth. For the computer 1102, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the disclosed subject matter.

A number of program modules can be stored in the drives and RAM 1112, including an operating system 1130, one or more application programs 1132, other program modules 1134 and program data 1136. All or portions of the operating system, applications, modules, and/or data can also be cached in the RAM 1112. It is appreciated that the disclosed subject matter can be implemented with various commercially available operating systems or combinations of operating systems.

A user can enter commands and information into the computer 1102 through one or more wired/wireless input devices, *e.g.*, a keyboard 1138 and a pointing device, such as a mouse 1140. Other input devices (not shown) may include a microphone, an IR remote control, a joystick, a game pad, a stylus pen, touch screen, or the like. These and other input devices are often connected to the processing unit 1104 through an input device interface 1142 that is coupled to the system bus 1108, but can be connected by other interfaces, such as a parallel port, an IEEE1394 serial port, a game port, a USB port, an IR interface, *etc.*

A monitor 1144 or other type of display device is also connected to the system bus 1108 *via* an interface, such as a video adapter 1146. In addition to the monitor 1144, a computer typically includes other peripheral output devices (not shown), such as speakers, printers, *etc.*

The computer 1102 may operate in a networked environment using logical connections *via* wired and/or wireless communications to one or more remote computers, such as a remote computer(s) 1148. For example, powerline type communications can allow control nodes of an electrical distribution system to share information. As a second example, cellular type communications can be employed, *e.g.*, as a wireless communications modality disclosed hereinabove. The remote computer(s) 1148 can be a workstation, a server computer, a router, a personal computer, a mobile device, portable computer, microprocessor-based entertainment appliance, a peer device or other common network node, and typically includes many or all of the elements described relative to the computer 1102, although, for purposes of brevity, only a memory/storage device 1150 is illustrated. The logical connections depicted include wired/wireless connectivity to a local area network (LAN) 1152 and/or larger networks, *e.g.*, a wide area network (WAN) 1154. Such LAN and WAN networking environments are commonplace in offices and companies, and facilitate enterprise-wide computer networks, such as intranets, all of which may connect to a global communications network, *e.g.*, the Internet.

When used in a LAN networking environment, the computer 1102 is connected to the local network 1152 through a wired and/or wireless communication network interface or adapter 1156. The adapter 1156 may facilitate wired or wireless communication to the LAN 1152, which may also include a wireless access point disposed thereon for communicating with the wireless adapter 1156.

When used in a WAN networking environment, the computer 1102 can include a modem 1158, or is connected to a communications server on the WAN 1154, or has other means for establishing communications over the WAN 1154, such as by way of the Internet. The modem 1158, which can be internal or external and a wired or wireless device, is connected to the system bus 1108 *via* the serial port interface 1142. In a networked environment, program modules depicted relative to the computer 1102, or portions thereof, can be stored in the remote memory/storage device 1150. It will be appreciated that the network connections shown are exemplary and other means of establishing a communications link between the computers can be used.

The computer 1102 is operable to communicate with any wireless devices or entities operatively disposed in wireless communication, *e.g.*, a printer, scanner, desktop and/or portable computer, portable data assistant, communications satellite, any piece of equipment or location associated with a wirelessly detectable tag, *e.g.*, a kiosk, news stand, restroom, etc., and telephone. This includes at least Wi-Fi and Bluetooth™ wireless technologies. Thus, the communication can be a predefined structure as with a conventional network or simply an ad hoc communication between at least two devices.

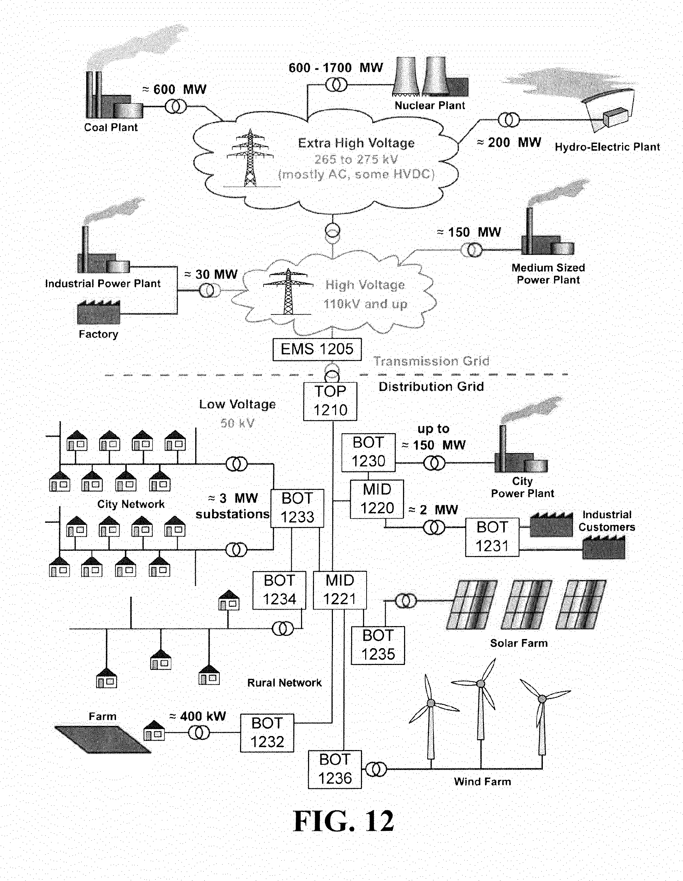

FIG. 12 is a representation of an exemplary electrical grid environment in which the various aspects of the disclosed subject matter can be practiced. It is to be appreciated that this figure and the associated disclosure is presented as a non-limiting example to facilitate a general comprehension of one or more aspects of the disclosed subject matter in connection with hypothetical electrical grid assets. Further, while sample values and assets are illustrated for context, these same sample values and assets are non-limiting and should not be viewed as defining any narrowing of scope. Generally, the assets of Fig. 12 can be assigned to a transmission grid portion (upper portion of figure) or a distribution grid portion (lower portion of figure) as is typical in many electrical grids worldwide. Transmission systems often are associated with very high AC voltages or even DC transmission of power. Transmission systems are generally presented in the context of delivering high power to regional distribution networks managed by a distribution grid entity.

The conventional electrical distribution grid generally has a flat control structure with control being centralized in a distribution control center (DCC). In contrast, as illustrated in Fig. 12, a non-flat control topography can be employed in accord with the subject matter disclosed herein. In this non-limiting example, three tiers of electrical distribution control system components are illustrated. A top-level DNNC component 1210 can be communicatively coupled to junior level DNNC components (*e.g.*, 1220 to 1236). In Fig. 12, the interconnections illustrate a basic tree structure topology.

In an aspect, two mid-level DNNC components 1220 and 1221 are logically placed between the bottom-level DNNC components and the top-level DNNC component 1210. Further, the several bottom-level DNNC components (*e.g.*, 1230 to 1236) can be associated with various edge assets. For example, bottom-level DNNC component 1230 can be associated with a city power plant and bottom-level DNNC component 1231 can be associated with a small group of industrial customers. Bottom-level DNNC component 1230 and 1231 can be logically connected to top-level DNNC component 1210 by way of mid-level DNNC component 1220. As such, data and rules can be bubble up or pushed down by way of this path. The bidirectional communication and closed loop control at each level (*e.g.*, top, mid, and bottom) can facilitate improved electrical distribution grid performance. For example, where additional power is needed by the industrial customers associated with bottom-level DNNC component 1231, control signals from mid-level DNNC component 1220 can source more power from city power plant by way of bottom-level DNNC component 1230 without directly involving the top-level DNNC component 1210 or draining energy from the illustrated solar farm or wind farm.

Similarly, mid-level DNNC component 1221 can be associated with bottom-level DNNC components 1232 to 1236. Bottom-level DNNC component 1233 for example can be logically associated with a plurality of transformers service a portion of a city network. Further, for example, bottom-level DNNC component 1234 can be associated with a single transformer as part of a rural network. Moreover, at bottom-level DNNC component 1232, for example, the DNNC component can be associate with a single consumer such as the farm. DNNC components can also be associated with distributed power generation, for example bottom-level DNNC component 1235 associated with a solar farm and bottom-level DNNC component 1236 associated with a wind farm. As such, bidirectional communication between top-level DNNC component 1210 and bottom-level DNNC components 1232-1236 can be by way of mid-level DNNC component 1221. As such, rules propagated for mid-level DNNC component 1220 and associate child DNNC components can be different from rules propagated for mid-level DNNC component 1221 and associated child DNNC components. Further, independent closed loop control can be effected, for example, at bottom-level DNNC component 1234 and the associated rural customers without impacting bottom-level DNNC component 1233 and the associated city network.

Moreover, EMS 1205 can reside on the transmission grid portion of Fig. 12. EMS 1205 can be a gateway to providing energy to the distribution grid where the distribution grid consumes more energy that it generates. Efficient utilization of energy in the distribution grid and reconfiguration of the distribution grid can decrease or stabilize the energy drawn from the transmission grid. However, communication between the transmission grid and the distribution grid can assist in coordinating between the two systems to further improve efficiency and reliability. For example, by efficiently utilizing the resources in the distribution grid, less energy needs to be purchased from the transmission grid. Further, understanding the consumption of energy in the distribution grid can facilitate predictive energy access models to more efficiently purchase blocks of energy at contract rates rather than relying on the pot energy market. Further, understanding the demands of the distribution grid can facilitate better roadmap planning for development and maintenance of the transmission grid.

As used in this application, the terms "component," "system," "ptatform," "layer," "selector," ``interface," and the like are intended to refer to a computer-related entity or an entity related to an operational apparatus with one or more specific functionalities, wherein the entity can be either hardware, a combination of hardware and software, software, or software in execution. As an example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer readable media having various data structures stored thereon. The components may communicate via local and/or remote processes such as in accordance with a signal having one or more data packets, e.g., data from one component interacting with another component in a local system, distributed system, and/or across a network such as the Internet with other systems *via* the signal. As another example, a component can be an apparatus with specific functionality provided by mechanical parts operated by electric or electronic circuitry, which is operated by a software or firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that confers at least in part the functionality of the electronic components.

Moreover, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an'' as used in the subject specification and annexed drawings should generally be construed to mean "one or more" unless specified otherwise or clear from context to be directed to a singular form.

Furthermore, the terms "user," "subseriber," "customer," "consumer," "prosumer,'' "agent," and the like are employed interchangeably throughout the subject specification, unless context warrants particular distinction(s) among the terms. It should be appreciated that such terms can refer to human entities or automated components supported through artificial intelligence, e.g., a capacity to make inference based on complex mathematical formalisms, which can provide simulated vision, sound recognition and so forth.

As used herein, the terms "infer" or "inference" generally refer to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Wi-Fi, or Wireless Fidelity, allows connection to the Internet from a couch at home, a bed in a hotel room, or a conference room at work, without wires. Wi-Fi is a wireless technology similar to that used in a cell phone that enables such devices, *e.g.*, computers, to send and receive data indoors and out; anywhere within the range of a base station. Wi-Fi networks use radio technologies called IEEE802.11 (a, b, g, n, *etc.)* to provide secure, reliable, fast wireless connectivity. A Wi-Fi network can be used to connect computers to each other, to the Internet, and to wired networks (which use IEEE802.3 or Ethernet). Wi-Fi networks operate in the unlicensed 2.4 and 5 GHz radio bands, at an 11 Mbps (802.11 b) or 54 Mbps (802.11 a) data rate, for example, or with products that contain both bands (dual band), so the networks can provide real-world performance similar to the basic "10BaseT'" wired Ethernet networks used in many offices.

Various aspects or features described herein can be implemented as a method, apparatus, or article of manufacture using standard programming and/or engineering techniques. In addition, various aspects disclosed in the subject specification can also be implemented through program modules stored in a memory and executed by a processor, or other combination of hardware and software, or hardware and firmware. The term "article of manufacture" as used herein is intended to encompass a computer program accessible from any computer-readable device, carrier, or media. For example, computer readable media can include but are not limited to magnetic storage devices, *e.g.*, hard disk, floppy disk, magnetic strips, etc., optical disks, e.g., compact disc (CD), digital versatile disc (DVD), blu-ray disc (BD), etc., smart cards, and flash memory devices, *e.g.*, card, stick, key drive, etc. Additionally it should be appreciated that a carrier wave can be employed to carry computer-readable electronic data such as those used in transmitting and receiving electronic mail or in accessing a network such as the internet or a local area network (LAN). Of course, those skilled in the art will recognize many modifications may be made to this configuration without departing from the scope or spirit of the disclosed subject matter.

As it employed in the subject specification, the term "processor" can refer to substantially any computing processing unit or device comprising, but not limited to comprising, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor also can be implemented as a combination of computing processing units.

In the subject specification, terms such as "store," "data store," "data storage," "database," "repository," and substantially any other information storage component relevant to operation and functionality of a component, refer to "memory components," or entities embodied in a "memory" or components comprising the memory. It will be appreciated that the memory components described herein can be either volatile memory or nonvolatile memory, or can include both volatile and nonvolatile memory. In addition, memory components or memory elements can be removable or stationary. Moreover, memory can be internal or external to a device or component, or removable or stationary. Memory can include various types of media that are readable by a computer, such as hard-disc drives, zip drives, magnetic cassettes, flash memory cards or other types of memory cards, cartridges, or the like.

By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Additionally, the disclosed memory components of systems or methods herein are intended to comprise, without being limited to comprising, these and any other suitable types of memory.

What has been described above includes examples of the various embodiments. It is, of course, not possible to describe every conceivable combination of components or methodologies for purposes of describing the embodiments, but one of ordinary skill in the art may recognize that many further combinations and permutations are possible. Accordingly, the detailed description is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component, *e.g.*, a functional equivalent, even though not structurally equivalent to the disclosed structure, which performs the function in the herein illustrated exemplary aspects of the embodiments. In this regard, it will also be recognized that the embodiments includes a system as well as a computer-readable medium having computer-executable instructions for performing the acts and/or events of the various methods.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

## Claims

1. An electrical distribution control system associated with an electrical distribution grid, the electrical distribution control system comprising:
a first distribution network node controller (DNNC) component configured to communicate with an electrical transmission grid component associated with an electrical transmission grid and further configured to communicate with an electrical distribution grid component to dynamically control of a portion of the electrical distribution grid.

2. The system of claim 1, wherein the first DNNC component is further configured to communicate with a second DNNC component communicatively coupled to the first DNNC component, and wherein the second DNNC component is further configured to communicate with the electrical distribution grid component to effect dynamic control of the portion of the electrical distribution grid.

3. The system of claim 2, wherein the first DNNC component is further configured to communicate with a third DNNC component configured to be communicatively interposed between the first and second DNNC components wherein the first DNNC component communicates with the second DNNC component by way of the third DNNC component, and wherein the third DNNC component is further configured to communicate with the electrical distribution grid component to effect dynamic control of the portion of the electrical distribution grid.

4. The system of claim 1, wherein the first DNNC component is further configured to communicate with a first DNNC interface component energetically coupled to the electrical distribution grid component to effect dynamic control of the portion of the electrical distribution grid.

5. The system of claim 4, wherein the first DNNC interface component further comprises a sensor component configured to determine at least one of a fault condition, a voltage level, a current level, or a temperature.

6. The system of claim 4, wherein the first DNNC interface component further comprises a protection component configured to open a circuit in response to a determination of a fault condition.

7. The system of claim 4, wherein the first DNNC interface component is energetically connected between the electrical distribution grid and a primary side of a distribution transformer.

8. The system of claim 4, wherein the first DNNC interface component is energetically connected between a secondary side of a distribution transformer and a subscriber-side equipment.

9. The system of claim 1, further comprising at least one subscriber-side smart appliance communicatively coupled to the first DNNC component, wherein the at least one subscriber-side smart appliance is configured to make energy access information accessible to the electrical distribution control system or facilitate control of the at least one subscriber-side smart appliance by the electrical distribution control system.

10. The system of claim 1, wherein the first DNNC component causes the electrical distribution grid component to dynamically reconfigure a topography of the electrical distribution grid by energetically connecting a first portion of the electrical distribution grid having surplus energy with a second portion of the electrical distribution grid having insufficient energy.

11. The system of claim 1, wherein the first DNNC component causes the electrical distribution grid component to dynamically reconfigure a topography of the electrical distribution grid by energetically disconnecting a first portion of the electrical distribution grid having surplus energy from a second portion of the electrical distribution grid having insufficient energy.

12. The system of claim 1, wherein, based on communication with the electrical transmission grid component, the first DNNC component increases utilization of distribution grid energy resources and reduces draw of additional energy from the electrical transmission grid, relative to a non-communicative relationship between the electrical transmission grid component and the first DNNC component.

13. A method, comprising:
accessing electrical transmission grid data of an electrical transmission grid;
applying at least one rule to the electrical transmission grid data at a first control node associated with the electrical distribution grid;
determining a control variable value based on the applying of the at least one rule to the electrical transmission grid data; and
based on the control variable value, at least one of adapting an electrical distribution grid configuration or electrical distribution grid utilization.

14. The method of claim 13, wherein the adapting of the electrical distribution grid configuration comprises at least one of energetically connecting a first portion of the electrical distribution grid having surplus energy with a second portion of the electrical distribution grid having insufficient energy, or energetically disconnecting a first portion of the electrical distribution grid having surplus energy from a second portion of the electrical distribution grid having insufficient energy.

15. The method of claim 13, wherein the adapting of the electrical distribution grid utilization comprises at least one of scheduling an energy access event, delaying the energy access event, or sharing an energy resource between at least two subscriber-side smart appliances based on the energy access event.
